# EUROPEAN PATENT APPLICATION

(11) **EP 1 970 621 A1**
(43) Date of publication of application: **17.09.2008**
(21) Application number: 06835172.5
(22) Date of filing: 25.12.2006
(51) Int. Cl.: F21V 8/00, G02B 6/00, G02F 1/13357, F21Y 101/02

(54) **PLANAR LIGHTING DEVICE AND LIQUID CRYSTAL DISPLAY DEVICE**

(30) Priority: 27.12.2005 JP 2005375682
(71) Applicant: MATSUSHITA ELECTRIC INDUSTRIAL CO., LTD., Osaka 571-8501 (JP)
(72) Inventor: ITOH, Tatsuo c/o Matsushita Electric Industrial Co., Ltd., Chuo-ku, Osaka 540-6207 (JP); MIZUSHIMA, Tetsuro c/o Matsushita Electric Industrial Co., Ltd., Chuo-ku, Osaka 540-6207 (JP); KASAZUMI, Kenichi c/o Matsushita Electric Industrial Co., Ltd., Chuo-ku, Osaka 540-6207 (JP); YAMAMOTO, Kazuhisa c/o Matsushita Electric Industrial Co., Ltd., Chuo-ku, Osaka 540-6207 (JP); KADOWAKI, Shinichi c/o Matsushita Electric Industrial Co., Ltd., Chuo-ku, Osaka 540-6207 (JP)
(74) Representative: Eisenführ, Speiser & Partner
(86) International application number: PCT/JP2006/325802
(87) International publication number: WO 2007/074784

(57) **Abstract**

A planar lighting device that applies light having high luminance with good monochromatic characteristics, and a liquid crystal display device using the same are provided. The planar lighting device (11) is provided with: a laser light source (12) that emits laser light beams of red, green and blue colors; at least one optical wave guide unit (14) that is placed in a plane state and is optically connected to the laser light source to propagate the laser light beams emitted from the laser light source ; a planar light guide plate (15) that is arranged on a surface side of the optical wave guide unit, spreads the laser light beams propagating through the optical wave guide unit, and outputs the laser light beams from one of principal surfaces (21); and a plurality of light taking out units (19) that are arranged on the other principal surface of the light guide plate, and guide the laser light beams propagating through the optical wave guide unit to the light guide plate.

## Description

### Technical Field

This invention relates to a planar lighting device using a laser light beam and a liquid crystal display device using such a planar lighting device.

### Background Art

In general, a liquid crystal display device is provided with a planar lighting device that uses a light source such as a discharge tube and a light emitting diode (LED) as backlight for a display panel or the like. When this planar lighting device is applied to a large-size display or the like, light having high luminance with strong monochromatic characteristics and a device for uniformly applying light from a light source are required.

The patent document 1 has disclosed that in order to obtain light having high luminance with strong monochromatic characteristics, a semiconductor laser with red-color light is used in place of a red-color LED.

Moreover, the patent document 2 has disclosed a fiber optical backlighting panel as a planar lighting device that can uniformly apply light from a light source. This fiber optical backlighting panel is provided with an optical fiber layer and a layer made of a bubble-state material that is formed thereon. When light propagating through the optical fiber has passed through a plurality of holes opened in the optical fiber and reached the bubble-state layer formed on the optical fiber layer, the light is scattered by the bubbles and expanded. Thus, the fiber optical backlighting panel can uniformly illuminate a plurality of key pads of a key board.

Moreover, with respect to the planar lighting device for uniformly applying light from a light source, the patent documents 3 to 5 have disclosed some structures in which by devising an optical system, light from a light source is uniformly expanded by an optical system to uniformly illuminate a liquid crystal display panel. For example, the patent document 3 utilizes a light guide plate, the patent document 4 utilizes a plurality of prisms, and the patent document 5 utilizes a plurality of mirrors.
Patent Document 1: JP-A-2005-64163
Patent Document 2: JP-A-05-210017
Patent Document 3: JP-A-2005-38643
Patent Document 4: JP-A-2005-43717
Patent Document 5: JP-A-2005-258052

### Disclosure of Invention

### Problems to be Solved by the Invention

The patent document 1 clearly describes that, with respect to red color light, a red-color semiconductor laser having high luminance with strong monochromatic characteristics is used. However, with respect to green color light and blue color light, the use of a light source having high luminance is not clearly described. Therefore, even when the planar lighting device of the patent document 1 is applied to a large-size display and a high-luminance display, the luminance and monochromatic characteristics of the light source are not sufficient. Moreover, since the patent documents 2 to 5 scatter externally light and make much wasteful use of quantity of light, light from a light source is not effectively utilized, failing to uniformly apply light.

The present invention has been devised to solve the above-mentioned problems, and its objective is to provide a planar lighting device that can emit light having high luminance with strong monochromatic characteristics, and apply light uniformly by utilizing such light efficiently, and a liquid crystal display device using such a planar lighting device.

### Means to Solve the Problems

A planar lighting device in accordance with the present invention is provided with: a laser light source that emits laser light beams of red, green and blue colors; at least one optical wave guide unit that is arranged in a plane state and is optically connected to the laser light source to propagate the laser light beams emitted from the laser light source ; a planar light guide plate that is arranged on the surface side of the optical wave guide unit, spreads the laser light beams propagating through the optical wave guide unit, and outputs the laser light beams from one of its principal surfaces; and a plurality of light taking out units that are arranged on the other principal surface of the light guide plate, and guide the laser light beams propagating through the optical wave guide unit to the light guide plate. By using the laser light sources, it is possible to output red-color light, green-color light and blue-color light having high luminance with good monochromatic characteristics. With this arrangement, it is possible to achieve a planar lighting device having superior color reproducibility. Moreover, since the light taking out unit directs laser light beams propagating through the optical wave guide unit to the light guide plate, it is possible to prevent light from being externally scattered. Thus, it becomes possible to utilize light from the light source efficiently. Moreover, by installing a plurality of light taking out units, the laser light beams, taken out of the optical wave guide unit, can be directed to the planar light guide plate with uniform luminance.

The plurality of light taking out units may be light guide units that are formed on the other principal surface of the light guide plate, in a two-dimensionally distributed manner at positions corresponding to the optical wave guide unit so as to be contacted with the optical wave guide unit, and that take out the laser light beams from the contact portion with the optical wave guide unit. The light guide units may be provided in such a manner that as propagation distance of the laser light beams from the laser light source by the optical wave guide unit increases, the number of the contact portions between the optical wave guide unit and the light guide units increases. The light guide units may be provided in such a manner that as propagation distance of the laser light beams from the laser light source by the optical wave guide unit increases, the area of the contact portions between the optical wave guide unit and the light guide units increases. Moreover, as propagation distance of the laser light beams from the laser light source by the optical wave guide unit increases, a pressing pressure applied to the contact portions between the optical wave guide unit and the light guide units may be increased in order to increase the area of the contact portions and to increase the amount of deformation of the optical wave guide unit at each contact portion so that a change in refractive index is increased. As propagation distance of the laser light beams from the laser light source by the optical wave guide unit increases, the size of each of the light guide units at each contact portion to the optical wave guide unit may be increased to increase the area of each of the contact portions. With these arrangements, even when the distance from the light-incident side of laser light beams becomes longer, it is possible to take out laser light beams having the same luminance as that on the light incident side, and consequently to uniform the luminance distribution of the laser light beams to be outputted from one of the principal surfaces.

The plurality of light taking out units may be prepared as a plurality of reflective mirrors that illuminate the light guide plate by reflecting the laser light beams outputted from the end face of the optical wave guide unit. In this case, the light guide plate may have a plurality of areas that are divided in a matrix shape, and the end face of the optical wave guide units is exposed to the area, with each of the reflective mirrors being installed for each of the plurality of areas. With this arrangement, it becomes possible to illuminate a wider area with uniform luminance.

The light taking out unit may have a mirror face formed by diagonally cutting the end face of the optical wave guide units so as to apply the laser light beams propagating through the optical wave guide units to the light guide plate. In this case, the light guide plate may have a plurality of areas that are divided in a matrix shape, with each of the mirror faces being installed for each of the plurality of areas. With this arrangement, it is possible to illuminate a wider area with uniform luminance. Moreover, it becomes possible to simplify the structure of the planar lighting device.

Preferably, the optical wave guide unit preserves a polarization plane of the laser light beams. With this arrangement, a laser light beam, emitted from the laser light source, is allowed to propagate through the optical wave guide unit, with its polarization plane being preserved, and outputted from one of the faces of the light guide plate. With this arrangement, when a liquid crystal display device is provided with this planar lighting device as its backlight illumination device, it becomes possible to omit the polarization plate on the light-incident side of the laser light beams. Thus, the light utilization efficiency is improved.

The optical wave guide unit may be an optical fiber.

The optical fiber may be placed in parallel with light guide plate in a manner so as to be turned over at each of the both ends of the light guide plate. At this time, when the optical wave guide unit is formed by a single continuous optical fiber, the manufacturing process can be simplified.

The light guide plate may be divided into a plurality of areas, with the optical fiber being placed in each of the plurality of areas. With this arrangement, light can be applied simultaneously from a plurality of optical fibers. Moreover, a laser light source can be placed for each of a plurality of optical fibers. Thus, it is possible to achieve a planar lighting device that can be sufficiently applied to a liquid crystal display device or the like with a large screen. Moreover, laser light beams having respectively different colors can be directed to a plurality of optical fibers so that various illuminating processes are achieved.

The optical fiber may be composed of a plurality of linear optical fibers. When a plurality of linear optical fibers are used, it becomes possible to eliminate the necessity of bending the optical fiber by 180°. Therefore, upon disposing optical fibers in a plane state, it becomes possible to miniaturize the entire shape.

In order to allow laser light beams to be sufficiently leaked even when the length of an optical fiber is short, a scatterer may be placed in the optical fiber, or the optical fiber may be bent in a bellows shape. Moreover, the optical fiber may be designed to have a terminal end formed into a mirror so that irregularities in the luminance distribution between the input end and the terminal end of the fiber may be corrected. A polarization beam splitter (PBS) and a 1/4 wavelength plate may be placed between the laser light source and the optical fiber so that the laser light beams are prevented from returning to the laser light source.

The optical wave guide unit may be a plurality of linear optical wave guide paths that are formed in a planar optical wave guide plate and propagate laser light beams from the laser light source.

The planar lighting device may also have a light path switch that switches laser light beams entering the optical wave guide unit. When a liquid crystal display device uses the planar lighting device having this light path switch as a backlight illumination device, a display process by the use of a scroll system that is a modified system of a field sequential system is available.

A liquid crystal display device of the present invention is provided with: a liquid crystal display panel; the planar lighting device that illuminates the liquid crystal display panel from the back face side. With this arrangement, it becomes possible to achieve a liquid crystal display device that can expand the color reproducing range greatly and provide an image display with high luminance and high quality. Since the laser light source has a high light-emitting efficiency, it is also possible to achieve low power consumption.

The planar lighting device is further provided with a light path switch that switches laser light beams entering the optical wave guide unit, and the liquid crystal display device may drive pixels of the liquid crystal display panel in synchronism with the light path switch. By driving pixels on a liquid crystal display panel in response to the area currently being irradiated with laser light beams, it becomes possible to achieve a liquid crystal display device with various modes, which has not been conventionally realized. For example, in the case where one screen is divided into a plurality of areas and the areas are illuminated, while red-color, green-color and blue-color laser light beams are successively switched, a display process by the use of a scroll system that is a modified system of a field sequential system is available. With this arrangement, it becomes possible to carry out a color image display without using color filters, and consequently to greatly improve the light utilization efficiency.

A diffusion plate may be arranged between the liquid crystal display panel and the planar lighting device. With this arrangement, it is possible to achieve a liquid crystal display device having further uniform luminance even when it has a large-size screen.

A planar lighting device in accordance another aspect of the present invention is provided with: a laser light source that emits laser light beams of red, green and blue colors; at least one optical wave guide unit that is optically connected to the laser light source to propagate the laser light beams emitted from the laser light source and is placed in a plane state; and a light guide plate that is arranged on the surface side of the optical wave guide unit, and takes out laser light beams propagating through the optical wave guide unit to output the laser light beams from one of its principal surfaces, and the optical wave guide unit is characterized by preserving the polarization plane of the laser light beams. By using the laser light sources, it is possible to output red-color light, green-color light and blue-color light having high luminance with good monochromatic characteristics. With this arrangement, it is possible to achieve a planar lighting device having superior color reproducibility. Moreover, since the optical wave guide unit is allowed to preserve the polarization plane of the laser light beams, laser light beams, emitted from the laser light source, is allowed to propagate through the optical wave guide unit with its polarization plane being preserved, and outputted from the principal surface of the light guide plate. With this arrangement, when a liquid crystal display device is provided with this planar lighting device as its backlight illumination device, it becomes possible to omit the polarization plate on the light-incident side of the laser light beams. Thus, the light utilization efficiency is improved.

### Effects of the Invention

In accordance with a planar lighting device of the present invention and a liquid crystal display device provided with the planar lighting device, it becomes possible to output light having high luminance with strong monochromatic characteristics, and consequently to uniformly apply light by efficiently utilizing such light.

### Brief Description of Drawings

Fig. 1A is a plan view that schematically shows a structure of a planar lighting device in accordance with a first embodiment of the present invention, and Fig. 1B is a schematic side view showing the planar lighting device viewed from a direction of arrow A of Fig. 1A.
Fig. 2A is a schematic cross-sectional view showing a structure of a liquid crystal display device provided with the planar lighting device of the first embodiment of the present invention, and Fig. 2B is a schematic structural view that shows the liquid crystal display device of Fig. 2A when viewed from the back face.
Fig. 3A is a side view of a planar lighting device having a structure in which a pressing pressure at a contact portion between a light guide unit and an optical fiber is changed, and Fig. 3B is a side view of a planar lighting device having a structure in which the shape of the light guide unit is changed at the contact portion with the optical fiber.
Fig. 4A is a plan view that schematically shows a structure of a planar lighting device in accordance with a second embodiment of the present invention, and Fig. 4B is a schematic side view showing the planar lighting device viewed from a direction of arrow A of Fig. 4A.
Fig. 5A is a plan view that schematically shows a structure of a planar lighting device in accordance with a third embodiment of the present invention, and Fig. 5B is a schematic side view showing the planar lighting device viewed from a direction of arrow A of Fig. 5A.
Fig. 6 is a schematic cross-sectional view showing a structure of a liquid crystal display device provided with the planar lighting device of the third embodiment of the present invention.
Fig. 7A is a plan view that schematically shows a structure of a light guide plate that is installed in a planar lighting device in accordance with a fourth embodiment of the present invention, and Fig. 7B is a schematic cross-sectional view taken along line C-C' of Fig. 7A.
Fig. 8A is a plan view that schematically shows a structure of the planar lighting device in accordance with the fourth embodiment of the present invention, and Fig. 8B is a schematic side view showing the planar lighting device viewed from a direction of arrow A of Fig. 8A.
Fig. 9A is a plan view that schematically shows a structure of a planar lighting device in accordance with a fifth embodiment of the present invention, and Fig. 9B is a schematic side view showing the planar lighting device viewed from a direction of arrow A of Fig. 9A.
Fig. 10A is a schematic plan view showing a structure of a planar lighting device in accordance with a sixth embodiment of the present invention, and Fig. 10B is a schematic side view showing the planar lighting device viewed from a direction of arrow A of Fig. 10A.
Fig. 11A is a side view that shows an example in which the end face of an optical fiber is cut diagonally in a seventh embodiment of the present invention, and Fig. 11B is a side view that shows an example in which the end face of an optical wave guide path is cut diagonally in the seventh embodiment of the present invention.

### Reference Numerals

11, 34, 39, 48, 50, 56 Planar lighting device
12 Laser light source
12a Red-color light source
12b Green-color light source
12c Blue-color light source
13, 14, 36, 36a, 36b, 36c, 36d, 36e, 36f, 37a, 37b, 37c, 40, 40a,
40b, 40c, 42, 42a, 42b, 42c, 51, 51a, 51b, 51c, 51d, 51e, 51f Optical fiber
15, 52 Light guide plate
16 Lower side
17 Upper side
18 Contact portion
19 Light guide unit
20, 30, 55, 60, 62 Laser light beam
21 Releasing face
22a, 22b, 22c, 22d Distance
23a, 23b, 23c, 23d Pressing pressure
24a, 24b, 24c Contact face
25, 26 Glass substrate
27 Liquid crystal
28 Electrode
29 Polarization plate
31 Liquid crystal plate
32, 43 Liquid crystal display device
33 Liquid crystal display panel
38 Light path switch
44, 58 Optical wave guide plate
45 Substrate
46, 46a, 46b, 46c, 57, 57a, 57b, 57c, 57d, 57e, 57f Optical wave guide path
47 Clad layer
49, 59 Light connecting unit
53 Reflective mirror
54, 61 Mirror surface
64 Color filter

### Best Mode for Carrying Out the Invention

The following description will discuss embodiments of the present invention in detail.

### (First Embodiment)

### [Structure of Planar lighting device]

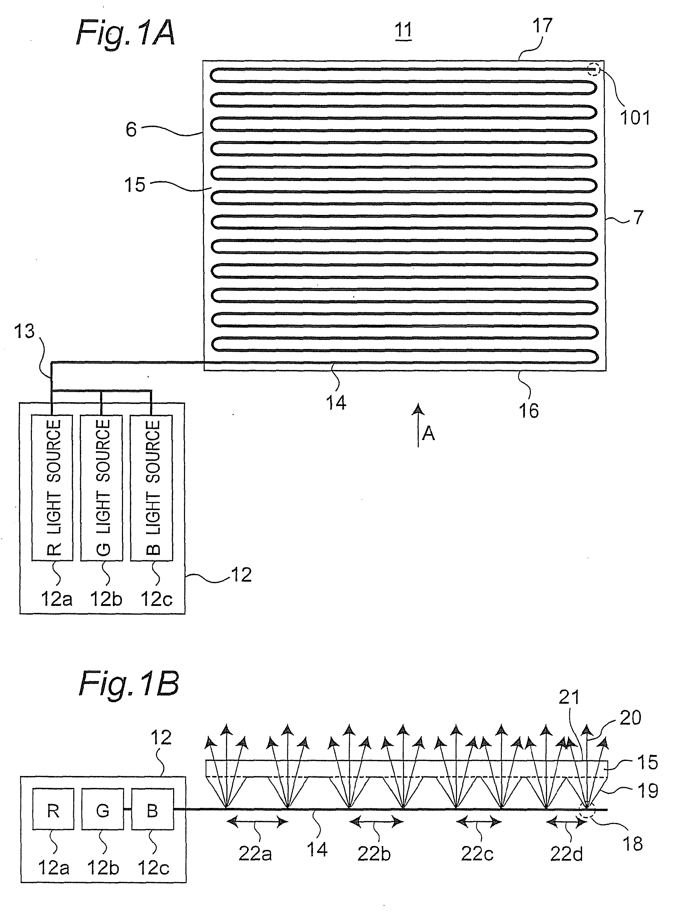

Figs. 1A and 1B show a planar lighting device in accordance with a first embodiment of the present invention. Fig. 1A is a plan view that schematically shows a structure of a planar lighting device 11 of the embodiment, and Fig. 1B is a side view viewed from a direction of an arrow A in Fig. 1A.

As shown in Fig. 1A, the planar lighting device 11 of the present embodiment has a laser light source 12, a connecting optical fiber 13 connected to the laser light source 12, an optical fiber 14 one of the end faces of which is optically connected to the laser light source 12 so as to transmit light from the laser light source 12 through the connecting optical fiber 13 and a light guide plate 15 that takes out a laser light beam from the optical fiber 14 and outputs it from one of the principal surfaces thereof. In Fig. 1A, the detailed structure of the light guide plate 15 is omitted so as to clearly indicate the layout of the optical fiber 14.

The laser light source 12, which includes a red-color light source (R light source) 12a, a green-color light source (G light source) 12b and a blue-color light source (B light source) 12c, emits laser light beams of three primary colors. The red-color light source 12a, the green-color light source 12b and the blue-color light source 12c are respectively connected to connecting optical fibers 13, and these connecting optical fibers 13 are combined into one optical fiber, and connected to the optical fiber 14.

The optical fiber 14 is disposed in a flat face state on the back face side of the light guide plate 15. In the present embodiment, the optical fiber 14 is one optical fiber, and disposed in parallel with one side of the light guide plate 15, while being turned back at the both ends of the light guide plate 15, so as to proceed from the lower side 16 to the upper side 17 of the light guide plate 15.

Each of the optical fiber 14 and the connecting optical fiber 13 is a polarization preserving fiber. The laser light beam, emitted from the laser light source 12 with an aligned polarization plane, propagates through the optical fibers 13, 14, with its polarization plane being preserved.

As shown in Fig. 1B, the light guide plate 15 is provided with a plurality of light guide units 19 that are distributed two-dimensionally, and placed at positions corresponding to the optical fiber 14 so as to take out the laser light beam from the optical fiber 14, and a planar releasing face 21 that expands the laser light beam taken out from the light guide units 19 and outputs the resulting laser light beam. The light guide units 19 are disposed on one of the principal surfaces of the light guide plate 15, and the releasing face 21 is arranged on the other principal surface.

In the present embodiment, each light guide unit 19 has a triangular shape, with the respective tips of the triangular shape that form contact portions 18 being made in contact with the optical fiber 14. The optical fiber 14 has its clad layer made in contact with the light guide units 19 with no coating formed thereon at each of the contact portions 18. Thus, the light guide units 19 are optically coupled to the optical fiber 14. The light guide unit 19 takes out one portion of the laser light beams that propagate through the optical fiber 14 from the contact portions 18 between the light guide units 19 and the optical fiber 14. The laser light beam 20, taken out from the contact portions 18 in a matrix shape, is expanded evenly inside the light guide plate 15. Consequently, the laser light beam having a uniform light intensity with an aligned polarization plane is outputted from the releasing face 21.

The light intensity of the laser light beam that propagates through the optical fiber 14 becomes smaller as the distance from the laser light source 12 increases. That is, on the plane of the light guide plate 15, the light intensity becomes smaller from the left side 6 near the laser light source 12 toward the right side 7 that is farther therefrom, as well as from the lower side 16 near the laser light source 12 toward the upper side 17 that is farther therefrom. For this reason, when an attempt is made to take the laser light beam 20 out from the optical fiber 14 to the light guide units 19 at the contact portions 18, for example, in equal intervals, the light output intensity to be taken out from the optical fiber 14 per unit length is not made constant. Therefore, in the present embodiment, in order to make the light output intensity to be taken out from the optical fiber 14 constant, the light guide units 19 are arranged so that the intervals between the adjacent contact portions 18 become shorter as the contact portions 18 depart from the laser light source 12. Supposing that the interval 22a between the contact portions 18 is α, intervals 22b, 22c and 22d that are located at departing positions from the laser light source 12 are respectively indicated by α - Δα, α - 2Δα and α - 3Δα. At this time, Δα/α is set to, for example, 1/10000 or less. However, the specific set value is determined on demand by the entire number of the contact portions 18 between the optical fiber 14 and the light guide units 19.

### [Structure of Liquid crystal display device]

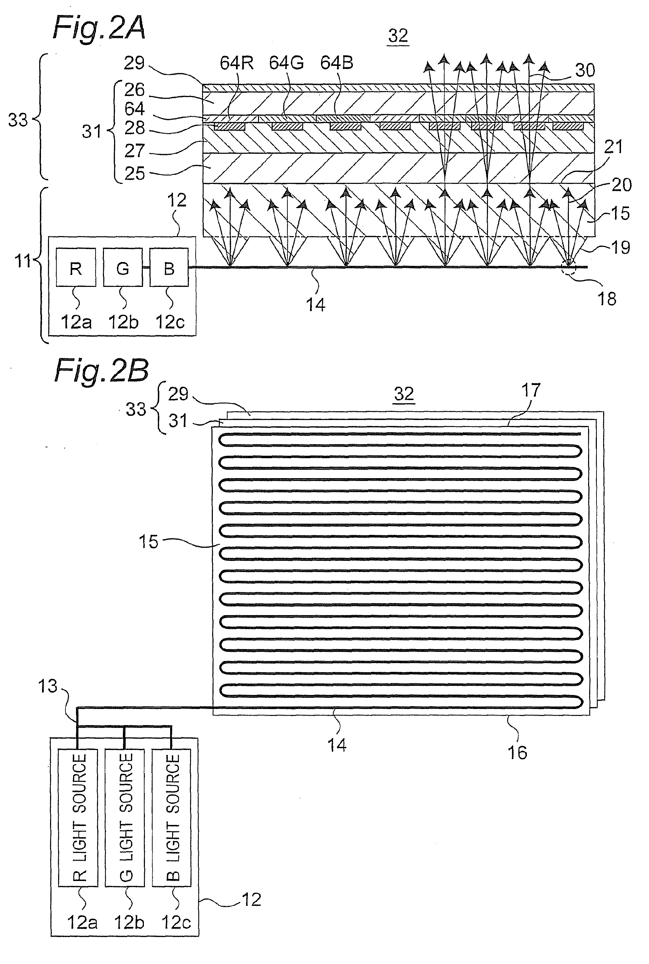

Figs. 2A and 2B show a structure of a liquid crystal display device 32 in which the planar lighting device 11 shown in Figs. 1A and 1B is used for backlight illumination of a liquid crystal display panel 33. Fig. 2A is a cross-sectional view of the liquid crystal display device 32, and Fig. 2B is a structural view of the liquid crystal display device 32 viewed from the back face side.

The liquid crystal display device 32 is provided with the planar lighting device 11 and a liquid crystal display panel 33 that displays images by utilizing laser light 20 outputted from the planar lighting device 11. The liquid crystal display panel 33 includes a liquid crystal plate 31 arranged on the surface side of a light guide plate 15 of the planar lighting device 11 and a polarization plate 29 attached to the surface side of the liquid crystal panel 31.

A laser light beam, outputted from the laser light source 12, enters the optical fiber 14, propagates through it, is directed to the light guide units 19 through the contact portions 18 that are in contact with the optical fiber 14 to enter the light guide plate 15, is diffused by the light guide plate 15 and further made incident on the liquid crystal plate 31. Since the laser light source 12 emits laser light 20 with an aligned polarization plane and the optical fiber 14, which is a polarization preserving fiber, transmits light from the laser light source 12, as it is, the laser light beam 20 with an aligned polarization plane can be made incident on the light guide plate 15 and outputted to the liquid crystal plate 31 from the light guide plate 15.

The liquid crystal plate 31 includes glass substrates 25 and 26, a liquid crystal 27 placed between the glass substrates 25 and 26, electrodes 28 and a color filter 64. The electrodes 28 are attached to the surface side of the liquid crystal 27, and a color filter 64, constituted by respective filters 64R, 64G and 64B for red, blue and green colors, is further formed on the surface side of the electrodes 28. The laser light beams 20, outputted from planar lighting device 11, are allowed to pass through the color filter 64, after having passed through the glass substrate 25, the liquid crystal 27 and the electrodes 28.

The liquid crystal plate 31 includes a plurality of picture pixels. One pixel is composed of sub-pixels of R, G and B. The R sub-pixel, G sub-pixel and B sub-pixel are formed by the electrodes 28 that are placed so as to correspond to the respective filters 64R, 64G and 64B. For example, by driving the electrodes 28, the laser light beam that has passed through the filter 64R of the color filter 64 is allowed to have a red color so that the R sub-pixel is formed. Laser light rays 30 of RGB colors that have passed through the color filter 64 are allowed pass through the glass substrate 26 and the polarization plate 29 and image-displayed. In the present embodiment, the liquid crystal display panel 33 has a transmission type or semi-transmission type structure, and is a liquid crystal display panel of a TFT Active Matrix type. A TFT (not shown) used for driving the electrodes 28 is formed either on the glass substrate 25 or on the glass substrate 26.

### [Functions and Effects]

The planar lighting device 11 in the present embodiment, which is provided with the laser light source 12 that emits light rays of red, blue and green colors, makes it possible to output light rays with high luminance and superior monochromatic characteristics. With this arrangement, the planar lighting device 11 of the present embodiment is properly applied to a large-size display and a display with high luminance. Moreover, since light emission wavelengths of the red-color light source 12a, the green-color light source 12b and the blue-color light source 12c, which are included in the laser light source 12, are superior in the color purity, it is possible to greatly expand the color reproduction range. The planar lighting device 11 of the present embodiment makes it possible to provide image display with high image quality in comparison with the conventional system using a cold cathode-ray tube and a LED light source. Moreover, since the light emission efficiency of the laser light source is much better in comparison with the LED light source, it becomes possible to achieve low power consumption. The liquid crystal display device 32 having the planar lighting device 11 of the present embodiment as its backlight illumination also has the above-mentioned effects.

A plurality of light guide units 19 are installed at positions in association with the optical fiber 14, and laser light beams are taken out directly from the light guide units 19. With this arrangement, it is possible to prevent light from scattering externally, and consequently to utilize light rays from the light sources efficiently. Moreover, in the planar lighting device 11 of the present embodiment, since the optical fiber 14 is placed in a plane state on the back face side of the planar light guide plate 15, and since a plurality of light guide units 19 are formed on one surface of the light guide plate 15, it becomes possible to illuminate a wide area with uniform luminance. Therefore, the planar lighting device 11 of the present invention makes it possible to utilize light rays from the light sources efficiently, and consequently to illuminate a wider area with uniform luminance.

Moreover, in the planar lighting device 11 of the present embodiment, the intervals between contact portions 18 of the optical fiber 14 and the light guide units 19 are made narrower as the distance from the laser light source 12 is made longer. With this arrangement, even in the case when, upon taking laser light beam having a fixed rate of output intensity successively out of the laser light beam propagating through the optical fiber 14 through the contact portions 18, the output intensity of the laser light beam decreases as propagation distance of the laser light beam increases, since the number of the contact portions 18 is increased as the distance from the laser light source 12 becomes longer, it becomes possible to compensate for the output intensity of the laser light beam. With this arrangement, the optical output intensity per unit length to be taken out from the optical fiber 14 is made constant so that the laser light beam can be outputted over the entire planar light guide plate 15 with further uniform luminance. Consequently, the liquid crystal display device 32 provided with the planar lighting device 11 of the present embodiment is allowed to exert high luminance uniformly even in the case of a large area.

Moreover, since polarization preserving fibers are used as the optical fiber 14 and the connecting optical fiber 13 of planar lighting device 11, the laser light beam 20 with an aligned polarization plane, outputted from the laser light source 12, is allowed to propagate through the optical fiber 14 with its polarization plane being preserved, and made incident on the light guide plate 14, and further outputted from the light guide plate 15 to the liquid crystal plate 31. In the conventional liquid crystal display panel, a liquid crystal panel is sandwiched between two polarization plates that transmit light rays with polarizing directions orthogonal to each other, However, in the liquid crystal display device 32 of the present embodiment, one of the polarization plates on the light incident side of the liquid crystal plate 31 can be omitted. By omitting the polarization plate, it becomes possible to greatly improve the light utilization efficiency and consequently to achieve a liquid crystal display device 32 with low power consumption.

Moreover, by temporally switching the RGB laser light rays that enter the optical fiber 14 from the red-color light source 12a, the green-color light source 12b and the blue-color light source 12c of the laser light source 12, it becomes possible to execute a displaying process in accordance with the field sequential system.

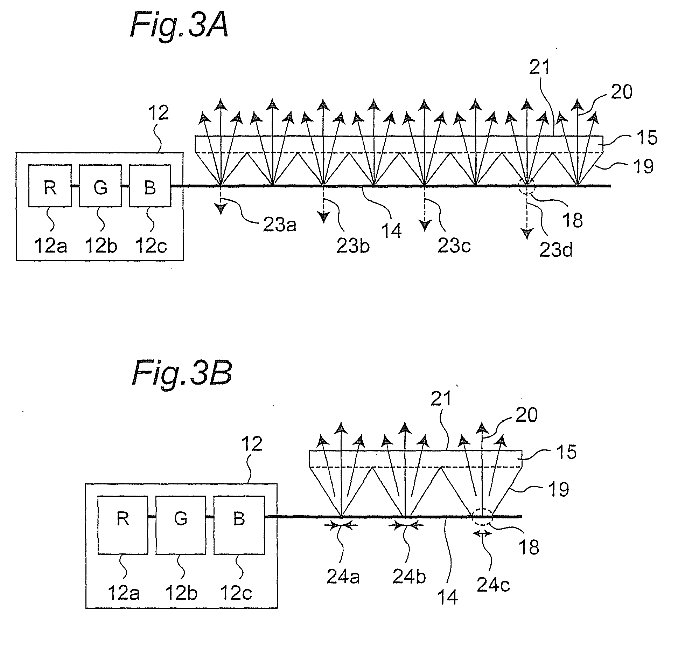

Here, in the present embodiment, in order to make constant the intensity of the light output to be taken out of the optical fiber 14 per unit length, the intervals between the contact portions 18 are narrowed as the distance from the laser light source 12 becomes longer; however, the method used for making constant the light output intensity to be taken out of the optical fiber 14 per unit length is not intended to be limited by the present embodiment. For example, as shown in Fig. 3A or Fig. 3B, the areas of the contact portions 18 may be increased as the distance from the laser light source 12 becomes longer. This method may be applicable to the embodiments described below in the same manner. Figs. 3A and 3B are side views viewed from a direction of the arrow A in Fig. 1A. Fig. 3A is a side view that shows a structure in which the area of each contact portion 18 is changed by changing a pressing pressure at the contact portion 18, and Fig. 3B is a side view that shows a structure in which the area of the contact portion 18 is changed by changing the shape of each light guide unit 19 at the contact portion 18.

In Fig. 3A, in order to make constant the light output intensity to be taken out from the optical fiber 14 per unit length, pressing pressures 23a to 23d at the contact portions 18 are designed so as to be successively increased as the distance from the corresponding contact portion 18 to the laser light source 12 becomes longer. Supposing that the pressing pressure 23a is β, pressing pressures 23b, 23c and 23d at the contact portions 18 that are successively located farther from the laser light source 12 are respectively given by β + Δβ, β + 2Δβ and β + 3Δβ. At this time, Δβ/β is set to, for example, 1/10000 or less; however, the specific set value is determined on demand by the entire number of the contact portions 18 between the optical fiber 14 and the light guide units 19. By increasing the pressing pressure, the area of the contact portion 18 between the optical fiber 14 and the light guide plate 15 is increased, and since the amount of deformation of the optical fiber 14 at the contact portion 18 is consequently increased, the change in the refractive index of the optical fiber 14 is increased so that the optical coupling is made tightened. Thus, more laser light beam can be taken out of each contact portion 18. Consequently, even when the distance through which laser light beam propagates increases with the result that the output intensity of the propagating laser light beam is reduced, the output intensity corresponding to a reduced portion can be compensated for by the increased area and the increased change in refractive index of the contact portion 18 so that laser light beam having a constant light output intensity can be taken out from the contact portions 18 of the light guide units 19. Therefore, laser light beam having uniform luminance can be outputted from the entire planar light guide plate 15.

In Fig. 3B, in order to make constant the light output intensity to be taken out from the optical fiber 14 per unit length, the shapes of the light guide units 19 at the contact portions 18 are designed so as to become larger successively as the distance from the optical fiber 14 to the laser light source 12 becomes longer. For example, supposing that the area of the contact face 24a at the contact portion 18 is γ, the areas of the contact faces 24b and 24c at the contact portions 18 respectively located at departing positions from the laser light source 12 are respectively given by γ + Δγ and γ + 2Δγ. At this time, Δγ/γ is set to, for example, 1/10000 or less; however, the specific set value is determined on demand by the entire number of the contact portions 18 between the optical fiber 14 and the light guide plate 15. By changing the shapes of the contact portions 18 of the light guide units 19 so as to increase the areas of the contact portions 18 between the optical fiber 14 and the light guide plate 15 so that the light output intensity to be taken out from the optical fiber 14 per unit length is made constant, the contact portions 18 having wider areas allow more light to be taken out. Consequently, even when the distance through which laser light beam is allowed to propagate increases with the result that the output intensity of the laser light beam to propagate is reduced, the output intensity corresponding to a reduced portion can be compensated for by the increased areas of the contact portions 18 so that laser light beam having a constant light output intensity can be taken out from the contact portions 18 of the light guide units 19. Therefore, laser light beam having uniform luminance can be outputted from the entire surface-state light guide plate 15.

Here, in the present embodiment, each light guide unit 19 has a triangular shape when viewed from a direction of the arrow A in Fig. 1A, however, the shape of the light guide unit 19 is not intended to be limited by the triangular shape. Any shape may be used as long as it is made in contact with the optical fiber 14 so that laser light beam can be taken out from the contact portions 18.

In the present embodiment, the light guide plate 15 is made from a resin material that is transparent and superior in optical characteristics and moldability. In particular, acrylic resin and polyolefin-based resin having only little birefringence are preferably used. Moreover, the light guide plate 15 may have a hollow shape. Here, with respect to the material used for forming the light guide units 19, a material having virtually the same refractive index as that of the optical fiber 14 is preferably used so as to avoid losses in the light quantity due to reflection and the like from the optical fiber 14.

A diffusion plate may be inserted between the light guide plate 15 and the liquid crystal plate 31. With this arrangement, it is possible to uniform the luminance and also to suppress speckle noise. The same resin material as that of the light guide plate 15 may be used as the material for the diffusion plate 15. In particular, acrylic resin and polyolefin-based resin having only little birefringence are preferably used. Moreover, the diffusion plate may have a hollow shape. Moreover, the light guide plate 15 may have a diffusing effect for diffusing light in the same manner as in the diffusion plate 15.

Moreover, by dispersing, in the resin material for the light guide plate 15 and the diffusion plate, resin beads having a refractive index different from that of the resin material, a diffusion area for diffusing laser light beam may be formed therein. With this arrangement, the luminance of laser light beam outputted from the planar lighting device 11 and the liquid crystal display device 32 in the present embodiment may be further uniformed, and by diffusing the laser light beam, speckle noise can be suppressed.

Moreover, in order to increase the diffusing effect of the laser light beam, fine irregularities may be formed on the side face or the like of each of the light guide units 19 of the light guide plate 15

Here, in order to increase the light output intensity, scattering members such as beads may be dispersed in the core of the optical fiber 14. With this arrangement, even when the optical fiber 14 is short, the laser light beam can be sufficiently leaked so that the laser light beam can be easily taken out. At this time, in order to make constant the light output intensity to be taken out from the optical fiber 14 per unit length, the scattering members are preferably scattered so as to make the density of the scattering members thicker as the distance from the laser light source 12 becomes longer. Moreover, in order to allow the laser light beam to be sufficiently leaked even when the optical fiber 14 is short, the optical fiber 14 may be processed to be bent in a bellows shape. Since the bent portions of the optical fiber 14 easily allow light to be leaked, the light output intensity can be increased.

Moreover, one portion of the outer circumference (for example, one half of the outer circumference) of the optical fiber 14 may be reflection coated. Light leaked from the core of the optical fiber 14 can be reflected by the reflection coating to be outputted in one direction so that an effective irradiation process can be carried out.

Moreover, the termination 101 of the optical fiber 14 as shown in Fig. 1A is formed into a mirror so that laser light beam may be returned into the optical fiber 14 at the termination 101 portion. With this arrangement, it becomes possible to correct irregularities in the luminance distribution between the input end of the optical fiber 14 on the input side of laser light beam and the termination 101.

Furthermore, a means used for preventing laser light beam from returning toward the laser light source 12 may be installed. For example, a polarization beam splitter (PBS) and a 1/4 wavelength plate may be installed between the laser light source 12 and the optical fiber 14.

### (Second Embodiment)

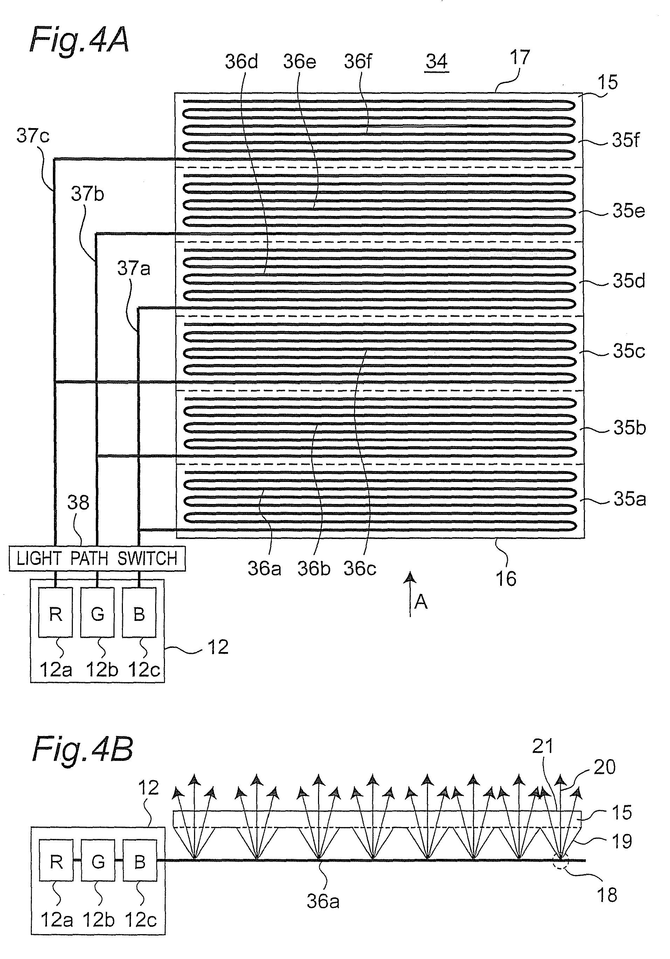

Figs. 4A and 4B show a structure of a planar lighting device 34 in accordance with a second embodiment of the present invention. Fig. 4A is a plan view that schematically shows a structure of a planar lighting device 34 of the present embodiment, and Fig. 4B is a side view viewed from a direction of an arrow A in Fig. 4A. Here, in Fig. 4A, in order to clearly illustrate the layout of optical fibers 36a to 36f, the detailed structure of the light guide plate 15 is omitted from the drawing.

In the planar lighting device 34 of the present embodiment, the light guide plate 15 has a plurality of areas 35a to 35f, and a plurality of optical fibers 36a to 36f are installed so as to correspond to the respective areas 35a to 35f. The optical fibers 36a to 36f are disposed in a plane state, and designed to be turned over at each of the both ends of the light guide plate 15 in the same manner as in the first embodiment, within the respective areas 35a to 35f.

As shown in Fig. 4B, the optical fibers 36a to 36f are respectively made in contact with the contact portions 18 of the light guide units 19 of the light guide plate 15 within the respective areas 35a to 35f, in the same manner as in the first embodiment. The light guide plate 15 outputs laser light beams 20 taken out from the contact portions 18 from the light releasing face 21.

One of the end faces of each of the optical fibers 36a to 36f is connected to any one of the three connecting optical fibers 37a, 37b and 37c. In Fig. 4A, the optical fibers 36a and 36d are connected to the connecting optical fiber 37a, the optical fibers 36b and 36e are connected to the connecting optical fiber 37b, and the optical fibers 36c and 36f are connected to the connecting optical fiber 37c. With this arrangement, one of the end faces of each of the optical fibers 36a to 36f is optically connected to the laser light source 12 through any one of the connecting optical fibers 37a, 37 and 37c.

In the present embodiment, the connecting optical fibers 37a to 37c and optical fibers 36a to 36f are polarization preserving fibers.

The planar lighting device 34 of the this embodiment is further provided with a light path switch 38 that switches output of laser light beams from the red-color light source 12a, the green-color light source 12b and the blue-color light source 12c, and outputs the switched laser light beams to the connecting optical fibers 37a, 37b and 37c. For example, the light path switch 38 switches connections between the respective light sources 12a to 12c and the connecting optical fibers 37a to 37c so that red, green and blue laser light beams enter any of the three connecting optical fibers 37a to 37c simultaneously, and the colors of the laser light beams that enter the three connecting optical fibers 37a to 37c are scrolled in the order of R, G and B as time elapses.

With the above-mentioned arrangement, the planar lighting device 34 of the present embodiment is allowed to exert the same effects as those of the first embodiment. Moreover, when a liquid crystal display device is designed by using the planar lighting device 34 of the present embodiment, the same effects as those of the first embodiment can be obtained. That is, since the color reproduction range is widened, with uniform high luminance being preserved even in the case of a large area, and since the polarization plate is omitted, the light utilization efficiency can be greatly improved.

Moreover, in the planar lighting device 34 of the present embodiment, since the optical fibers 36a to 36f are respectively formed in the areas 35a to 35f of the light guide plate 15, it is possible to irradiate a plurality of different areas with laser light beams having different colors at the same time, by switching the laser light beams to enter the fibers 36a to 36f by the use of the light path switch 38, so that the laser light rays can be scrolled. Therefore, in the case where the liquid crystal device is provided with the planar lighting device 34 of the present embodiment, by driving the electrodes 28 shown in Fig. 2A in synchronism with the RGB laser light rays to be outputted from the respective areas 35a to 35f of the light guide plate 15, the pixels of the liquid crystal display panel 33 can be driven. With this arrangement, it becomes possible to omit the color filter 64 shown in Fig. 2A. The driving operation of pixels in the liquid crystal display panel 33 in synchronism with the light path switch 38 can be easily carried out by, for example, controlling a driving circuit for driving the electrodes 28 so as to make the light path switch 38 and the driving circuit in synchronism with each other. The planar lighting device 34 of the present embodiment is suitably applied to a liquid crystal display device of a field sequential type without using the color filter 64. When the liquid crystal display device is constructed without using the color filter 64, the light utilization efficiency is improved so that it is possible to further increase the luminance and also to make the liquid crystal display device thinner. Moreover, the structure of the pixels can be simplified greatly. Therefore, the liquid crystal display device provided with the planar lighting device 34 of the present embodiment makes it possible to greatly expand the color reproducing range, and also to provide an image display with high luminance and high quality so that a power consumption cab be reduced. Here, the light path switch 38 may be used for the planar lighting device 11 of the first embodiment.

With respect to the contact portions 18 between the optical fibers 36a to 36f and the light guide units 19, in order to take out a laser light beam with a constant light output intensity from each of the contact portions 18, the intervals between the contact units 18 are made narrower as the distance from the laser light source 12 becomes longer, in the same manner as in the first embodiment. However, as shown in Figs. 3A and 3B, the change in refraction index of the optical fibers 36a to 36f of the contact portions 18 and the area of each of the contact portions 18 may be increased as the distance from the laser light source 12 becomes longer.

Although the single planar light guide plate 15 is used in the planar lighting device 34 of the present embodiment, a plurality of light guide plates corresponding to the respective areas 35a to 35f of Fig. 4A may also be used.

### (Third Embodiment)

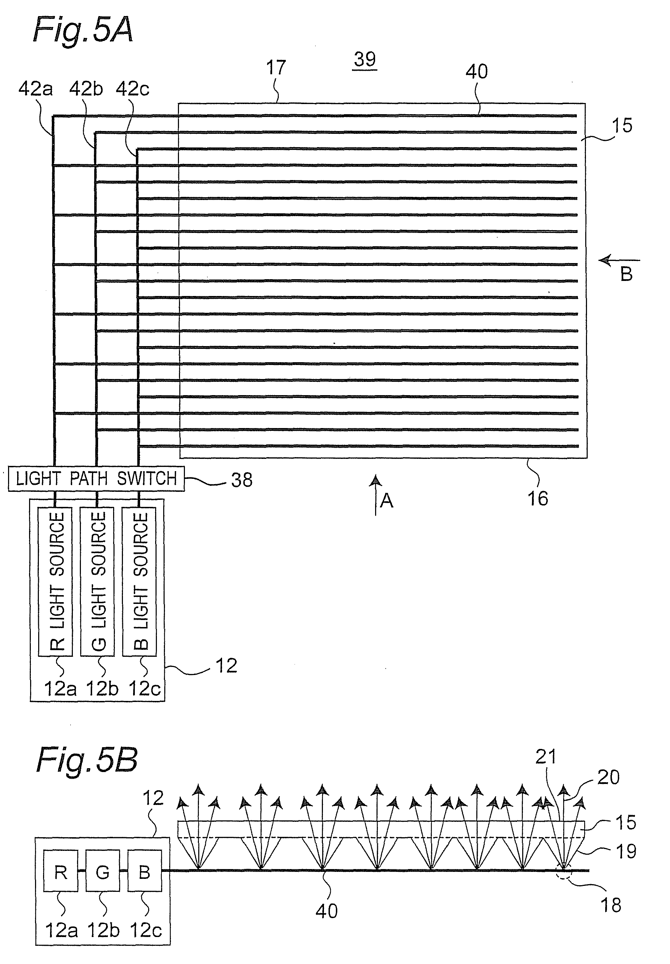

Figs. 5A and 5B show a structure of a planar lighting device 39 in accordance with a third embodiment of the present invention. Fig. 5A is a plan view that schematically shows a structure of a planar lighting device 39 of the present embodiment, and Fig. 5B is a side view viewed from a direction of an arrow A in Fig. 5A. Here, in Fig. 5A, in order to clearly illustrate the layout of optical fibers 40, the detailed structure of the light guide plate 15 is omitted from the drawing.

In the planar lighting device 39 of the present embodiment, a plurality of linear optical fibers 40 are disposed in a plane state on the back face side of the light guide plate 15. One of the end faces of each of the linear optical fibers 40 is connected to the end face of any one of connecting optical fibers 42a to 42c. The other end face of each of the connecting optical fibers 42a to 42c is connected to the light path switch 38. The optical fibers 40 and the connecting optical fibers 42a to 42c are polarization preserving fibers. The structure of the present embodiment is the same as that of the first embodiment except that the optical fibers 40 have a linear shape, and as shown in Fig. 5B, each of the optical fibers 40 is made in contact with the light guide units 19 of the light guide plate 15 at the contact portions 18. The light guide plate 15 takes out laser light beams 20 from each of the contact portions 18, and outputs the laser light beams 20 from a releasing face 21 thereof. With this structure, the planar lighting device 39 of the present embodiment is allowed to exert the same effects as those of the first embodiment.

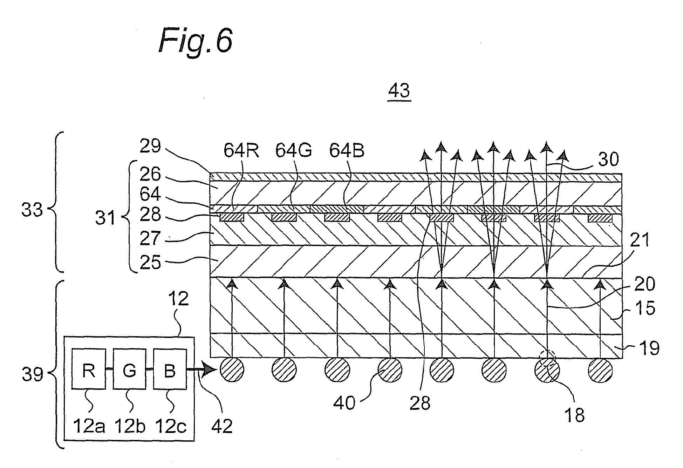

Fig. 6 shows a liquid crystal display device 43 in accordance with the present embodiment. Fig. 6 is a side view of the liquid crystal display device 43 viewed in a direction of an arrow B of Fig. 5A. The liquid crystal display device 43 of the present embodiment uses the planar lighting device 39 shown in Figs. 5A and 5B as a backlight illumination device thereof. The liquid crystal display device 43 is provided with a liquid crystal display panel 33 which carries out an image display by utilizing laser light beam 20 outputted from the planar lighting device 39. The liquid crystal display panel 33 is the same as that shown in Fig. 2A and 2B.

Here, since the planar lighting device 39 of the present embodiment has a light path switch 38 in the same manner as in the second embodiment, the colors of laser light rays to be made incident on the connecting optical fibers 42a, 42b and 42c can be switched so as to be scrolled in the order of RGB. For example, from the optical fiber 40 closest to the upper side 17 to the optical fiber 40 closest to the lower side 16, the scrolling processes can be carried out in the order of RGB sequentially with time. With this arrangement, the color filter 64 of the liquid crystal display device 43 can be omitted. Consequently, it becomes possible to improve the light utilization efficiency, and the luminance can be further enhanced. Moreover, the structure of the pixels can be greatly simplified.

Here, with respect to the contact portions 18 between the linear optical fibers 40 of the present embodiment and the light guide units 19, in order to take out a laser light beam with a constant light output intensity from each of the contact portions 18, the distance between the contact portions 18 is made narrower as the distance from the laser light source 12 becomes longer, in the same manner as in the first embodiment. However, as shown in Figs. 3A and 3B, the change in refraction index of the optical fibers 40 of the contact portions 18 and the area of each of the contact portions 18 may be increased as the distance from the laser light source 12 becomes longer. The ratio α/Δα between the distances, the ratio β/Δβ between the pressing pressures, or the ratio γ/Δγ between the areas at each of the contact portions 18 of a single optical fiber 40 are preferably set, for example, in a range from 1/10 to 1/100.

### (Fourth Embodiment)

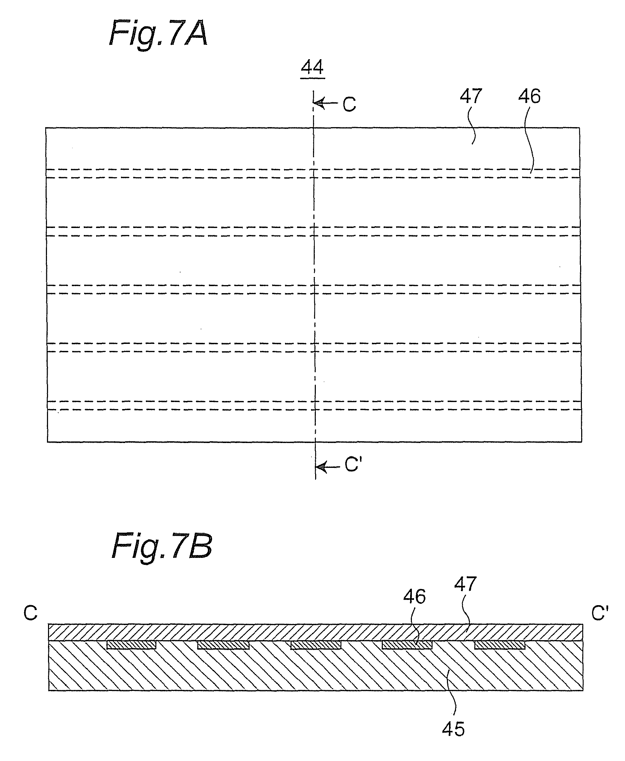

The present embodiment will discuss an example in which an optical wave guide plate is used in place of the optical fiber. Fig. 7A and Fig. 7B show an optical wave guide plate 44 used for transmitting a laser light beam. Fig. 7A is a plan view that schematically shows the optical wave guide plate 44 of the present embodiment, and Fig. 7B is a schematic cross-sectional view obtained by cutting the structure of Fig. 7A along line C-C' thereof.

The optical wave guide plate 44 is provided with a plurality of optical wave guide paths 46 formed on the substrate 45, through which a laser light beam is propagated. The optical wave guide plate 44 having the optical wave guide paths 46 can be formed by using various materials and various methods. In the present embodiment, the optical wave guide plate 44 is made of a resin material by using a stamper method. Specifically, first, hollow grooves, each having a rectangular shape, are formed on a substrate 45 made of a resin material by using the stamper method. Next, by filling these rectangular-shaped hollow grooves with a material having a higher refractive index than that of the resin material of the substrate 45, optical wave guide paths 46 that become core portions through which a laser light beam propagates are formed. In the present embodiment, each of the optical wave guide paths 46 is formed into a shape with a width of 5 microns and a thickness of one micron, and this shape allows the laser light beam to propagate with its polarization plane being preserved. Moreover, a clad layer 47 is formed on the optical wave guide paths 46, with a thickness of about one micron. The clad layer 47 is made from a material having a refractive index that is lower than that of the material for the optical wave guide paths 46, and is virtually the same as that of the material for the substrate 45. With this arrangement, the optical wave guide paths 46 of the present embodiment allow the laser light beam to propagate with its polarization plane being preserved.

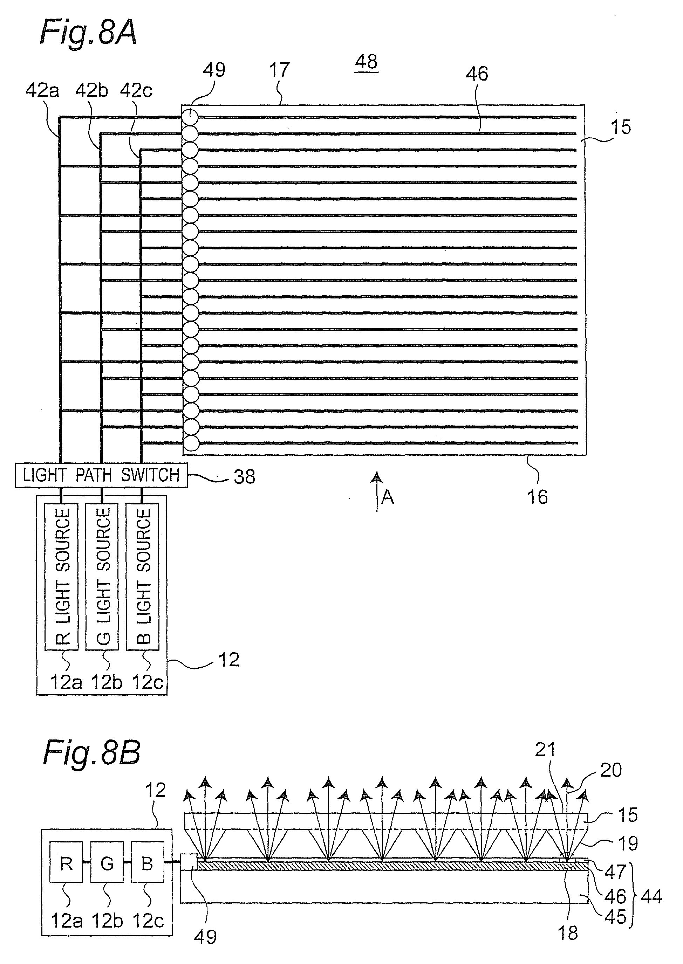

Fig. 8A and Fig. 8B show a planar lighting device 48 that is provided with the optical wave guide plate 44 of the present embodiment. Fig. 8A is a plan view that schematically shows the structure of the planar lighting device 48 of the present embodiment, and Fig. 8B is a schematic view that shows a side face viewed from a direction of arrow A in Fig. 8A. Here, in Fig. 8A, in order to clearly illustrate the layout of optical wave guide paths 46, the detailed structures of the optical wave guide plate 44 and the light guide plate 15 are omitted from the drawing.

In the planar lighting device 48 of the present embodiment, the optical wave guide plate 44 is installed on the back face side of the planar light guide plate 15. Each of the optical wave guide paths 46 formed on the optical wave guide plate 44 is connected to one end of any one of connecting optical fibers 42a, 42b and 42c by a light connecting unit 49, so that laser light beams enter the optical wave guide paths 46, respectively. The light guide units 19 of the light guide plate 15 are contacted with the clad layer 47 of the optical wave guide plate 44 at contact portions 18 so that a laser light beam is taken out from each of the positions of the optical wave guide paths 46 corresponding to the contact portions 18.

The structure of the present embodiment is the same as that of the third embodiment except that the optical wave guide plate 44 having the linear optical wave guide paths 46 is installed on the back face side of the light guide plate 15, in place of the linear optical fibers 40 of Figs. 5A and 5B. Thus, the planar lighting device 48 of the present embodiment and the liquid crystal display device having the planar lighting device 48 of the present embodiment are allowed to exert the same effects as those of the third embodiment.

Moreover, the optical wave guide paths 46 of the present embodiment are designed such that a wave guide structure preserves the polarization plane. Therefore, when a liquid crystal display device has the planar lighting device 48 of the present embodiment, it becomes possible to omit a polarization plate on the light incident side in the same manner as in the application of polarization preserving fibers.

Here, with respect to the contact portions 18 between the linear optical wave guide paths 46 and the light guide portions 19 of the present embodiment, in order to take out a laser light beam having a constant light output intensity from each of the contact portions 18, the intervals between the contact portions 18 are narrowed as the distance from the laser light source becomes longer; however, as shown in Fig. 3A or Fig. 3B, the change in refractive indexes of the optical guide paths 46 at the contact portions 18 and the areas of the contact portions 18 may be increased as the distance from the laser light source 12 becomes longer.

### (Fifth Embodiment)

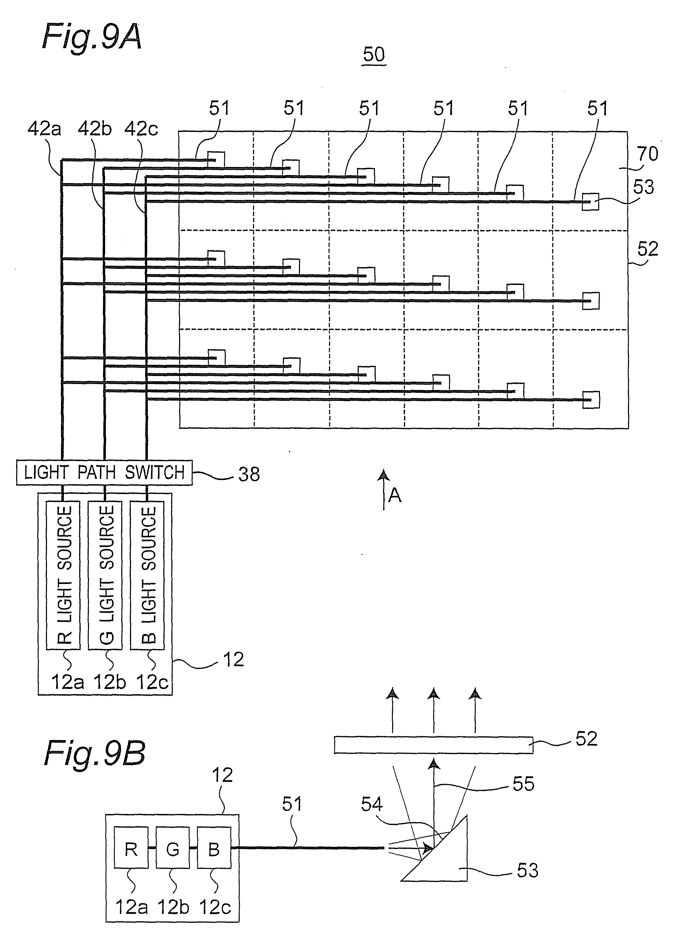

Fig. 9A and Fig. 9B show a structure of a planar lighting device 50 of the present embodiment. Fig. 9A is a plan view of the planar lighting device 50 of the present embodiment, and Fig. 9B is a side view viewed from a direction of arrow A in Fig. 9A. Here, in Fig. 9A, in order to clearly illustrate the layout of optical fibers 51, the detailed structure of a light guide plate 52 is omitted from the drawing.

As shown in Fig. 9A, the planar lighting device 50 of the present invention is provided with a light guide plate 52 having a plurality of divided areas 70 disposed in a matrix shape. In Fig. 9A, the number of the divided areas 70 is 18 (= 3 × 6). Reflective mirrors 53 that reflect laser light beam are respectively attached to the divided areas 70. A plurality of linear optical fibers 51 are disposed in a plane state, and arranged on the back face side of the light guide plate 52. One of the end faces of each optical fiber 51 is exposed to the divided area 70, and the other end face is connected to any one of connecting fibers 42a, 42b and 42c. The reflective mirror 53 and the end face of each optical fiber 51 on the exposed side are disposed virtually in the center of each divided area 70. The connecting fibers 42a, 42b and 42c and the optical fibers 51 are polarization preserving fibers. The structure in which the connecting fibers 42a, 42b and 42c are optically connected to the laser light source 12 through the light path switch 38 is the same as those described in the third and fourth embodiments.

As shown in Fig. 9B, a laser light beam emitted from the laser light source 12 is made incident on one of the end faces of the optical fiber 51, and outputted from the other end face exposed to the divided area 70, and then reflected by the mirror face 54 of the reflective mirror 53 to enter the planar light guide plate 52. The light guide plate 52 expands the laser light beam and then outputs the resulting laser light beam.

Since the laser light beam to be outputted from the optical fiber 51 is outputted from a core having a diameter of about 1 micron of the optical fiber 51, it is reflected by the mirror face 54 of the reflective mirror 53 while being expanded by a diffractive action. For this reason, a laser light beam 55 reflected by the reflective mirror 53 is directed to the light guide plate 52 while being further expanded. Consequently, the light guide plate 52 is allowed to output a laser light beam having uniform luminance with its polarization plane being preserved.

In the planar lighting device 50 of the present embodiment, by installing a plurality of mirrors 53 in association with the divided areas 70, the laser light beam taken out from the optical fiber 51 can be uniformly applied to the light guide plate 52. Since the reflective mirror 53 totally reflects the laser light beam to the light guide plate 52, it is possible to prevent light from scattering outward. Thus, it becomes possible to direct the laser light beam to the light guide plate 52 efficiently. Moreover, in the same manner as in the first to fourth embodiments, the planar lighting device 50 of the present embodiment is provided with the laser light source 12, uses polarization preserving fibers as the connecting fibers 42a, 42b, 42c and the optical fibers 51, and allows the light path switch 38 to switch the laser light beam to the connecting fibers 42a, 42b and 42c. Therefore, it is possible to obtain the same effects as those of the aforementioned embodiments. Consequently, a liquid crystal display device that uses the planar lighting device 56 of the present embodiment as its backlight illumination device makes it possible to greatly expand the color reproducing range and also to provide an image display with high luminance and high quality. It is also possible to achieve a low power consumption.

### (Sixth Embodiment)

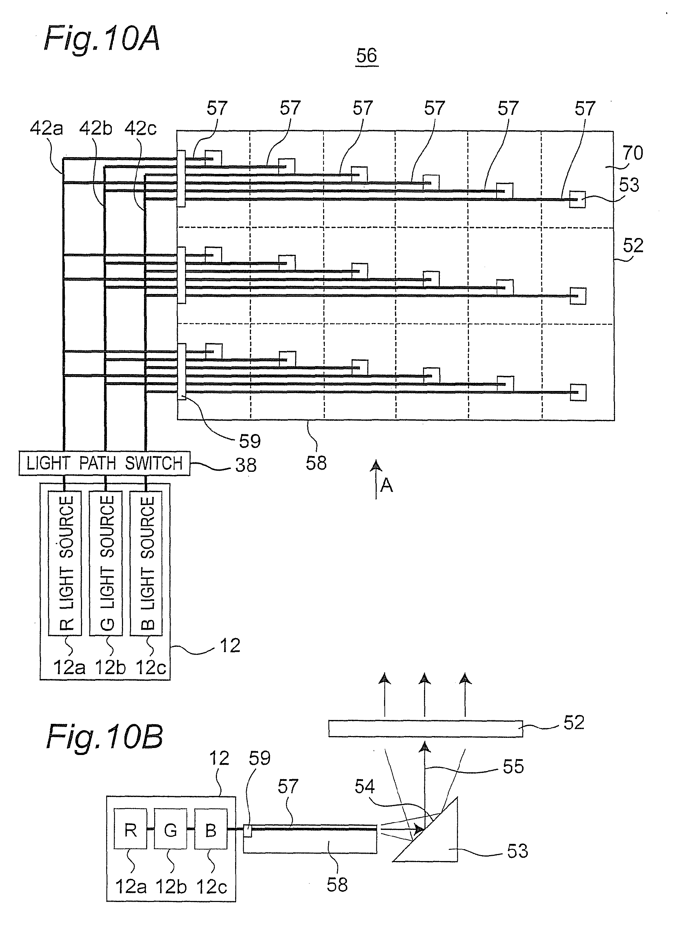

Fig. 10A and Fig. 10B show a structure of a planar lighting device 56 of the present embodiment. Fig. 10A is a plan view that shows a structure of a planar lighting device 56 of the present embodiment, and Fig. 10B is a side view viewed from a direction of arrow A in Fig. 10A. Here, in Fig. 10A, in order to clearly illustrate the layout of optical wave guide paths 57, the detailed structure of the light guide plate 52 is omitted from the drawing. In the planar lighting device 56 of the present embodiment, in place of the linear optical fiber 51 of Figs. 9A and 9B, an optical wave guide plate 58 having a linear optical wave guide path 57 is installed on the back face side of the light guide plate 52. The other structures are the same as those of the fifth embodiment.

As shown in Fig. 10A, each of the optical wave guide paths 57 arranged on the optical wave guide plate 58 has its one end face exposed to the divided area 70, with the other end face being connected to any one of connecting fibers 42a, 42b and 42c by a light connecting unit 59. The end face on the exposed side of each optical wave guide path 57 and the mirror 53 are disposed virtually in the center of each divided area 70. The method for forming the optical wave guide paths 57 in the optical wave guide plate 58 is the same as that of the fourth embodiment, and the optical wave guide paths 57 preserves the polarization plane of the propagating laser light beam.

As shown in Fig. 10B, a laser light beam emitted from the laser light source 12 enter one of the end faces of the optical guide path 57, and is outputted from the other end face of the optical wave guide path 57 exposed to the divided area 70, and then is reflected by the mirror face 54 of the reflective mirror 53 to enter the light guide plate 52.

Since the laser light beam to be outputted from the optical wave guide path 57 is outputted from a core having a diameter of about 1 micron of the optical wave guide path 57, it is reflected by the mirror face 54 of the reflective mirror 53, while being expanded by a diffractive action, and the reflected laser light beam 55 is directed to the light guide plate 52 while being further expanded. Consequently, the light guide plate 52 is allowed to output a laser light beam having uniform luminance with its polarization plane being preserved.

The planar lighting device 56 of the present embodiment exerts the same effects as those of the fifth embodiment.

### (Seventh Embodiment)

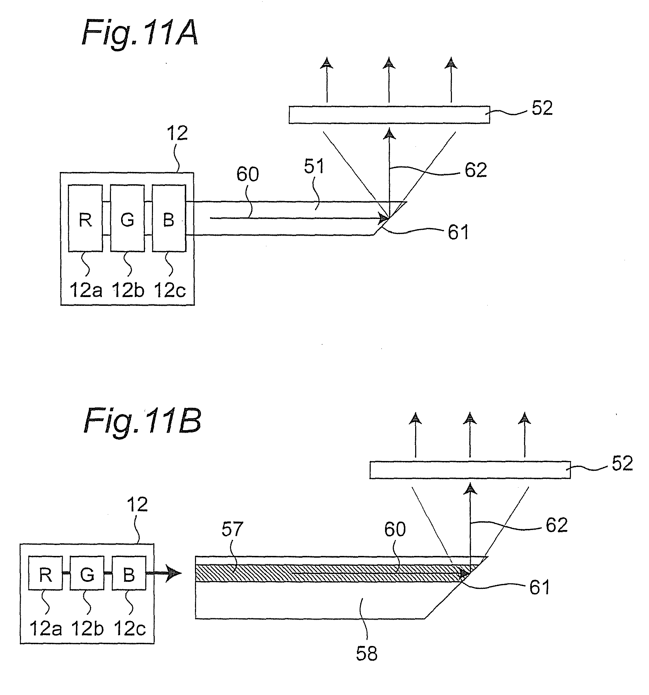

The present embodiment will discuss a structure in which, instead of using the reflective mirror 53 in Figs. 9A, 9B, 10A and 10B, the end face on the laser light beam releasing side of the optical fiber 51 or the optical wave guide path 57 is cut diagonally, and a laser light beam is applied to the light guide plate 52 through the cut-off cross section. Fig. 11A shows a side face of a planar lighting device in which the end face of the optical fiber 51 is diagonally cut, and Fig. 11B shows a side face of a planar lighting device in which the optical wave guide path 57 is subjected to a diagonal cutting process.

In the present embodiment, the end face of the optical fiber 51 on the laser light beam releasing side and the end face of the optical wave guide plate 58 having the optical guide paths 57 are cut off with 45 degrees, and a mirror face 61 that totally reflects the laser light beam is formed on each of the cut-off faces. The mirror face 61 is formed by, for example, a vapor deposition of a metal thin film or a vapor deposition of a dielectric multiple-layer film. A laser light beam 60 propagating through the optical fiber 51 or the optical wave guide path 57 is reflected by the mirror face 61 to enter the light guide plate 52. The light guide plate 52 further expands the laser light beam, and outputs the laser light beam.

In accordance with the present embodiment, since the reflective mirror 53 shown in Figs. 9A, 9B, 10A and 10B is omitted, the structure of the planar lighting device can be further simplified.

### Industrial Applicability.

The planar lighting device of the present invention makes it possible to achieve a high luminance, a wide color reproducing range, a uniform luminance and improved light utilization efficiency, and is effectively useful for a liquid crystal display device having a large-size display and a high luminance display.

## Claims

1. A planar lighting device comprising:
a laser light source that emits laser light beams of red, green and blue colors;
at least one optical wave guide unit that is arranged in a plane state, and is optically connected to the laser light source to propagate the laser light beams emitted from the laser light source ;
a planar light guide plate that is arranged on a surface side of the optical wave guide unit, spreads the laser light beams propagating through the optical wave guide unit, and outputs the laser light beams from one of principal surfaces; and
a plurality of light taking out units that are arranged on the other principal surface of the light guide plate, and guide the laser light beams propagating through the optical wave guide unit to the light guide plate.

2. The planar lighting device according to claim 1, wherein the plurality of light taking out units are light guide units that are formed on the other principal surface of the light guide plate, in a two-dimensionally distributed manner at positions corresponding to the optical wave guide unit so as to be contacted with the optical wave guide unit, and that take out the laser light beams from contact portions with the optical wave guide unit.

3. The planar lighting device according to claim 2, wherein the light guide units are provided in such a manner that as propagation distance of the laser light beams from the laser light source by the optical wave guide unit increases, the number of the contact portions between the optical wave guide unit and the light guide units increases.

4. The planar lighting device according to claim 2, wherein the light guide units are provided in such a manner that as propagation distance of the laser light beams from the laser light source by the optical wave guide unit increases, the area of the contact portions between the optical wave guide unit and the light guide units increases.

5. The planar lighting device according to claim 4, wherein, as propagation distance of the laser light beams from the laser light source by the optical wave guide unit increases, a pressing pressure applied to the contact portions between the optical wave guide unit and the light guide units is increased to increase the area of the contact portions, and to increase the amount of deformation of the optical wave guide unit at each contact portion so that a change in refractive index is increased.

6. The planar lighting device according to claim 4, wherein, as propagation distance of the laser light beams from the laser light source by the optical wave guide unit increases, the size of each of the light guide units at each contact portion with the optical wave guide unit is increased to increase the area of each of the contact portions.

7. The planar lighting device according to claim 1, wherein
the plurality of light taking out units are a plurality of reflective mirrors that illuminate the light guide plate by reflecting the laser light beams outputted from the end face of the optical wave guide unit,
the light guide plate has a plurality of areas that are divided in a matrix shape,
the end face of the optical wave guide units is exposed to the areas, and
each of the reflective mirrors is installed for each of the plurality of areas.

8. The planar lighting device according to claim 1, wherein
each of the light taking out units is a mirror face formed by diagonally cutting the end face of the optical wave guide units so as to apply the laser light beams propagating through the optical wave guide units to the light guide plate,
the light guide plate has a plurality of areas that are divided in a matrix shape, and
each of the mirror faces is installed for each of the plurality of areas.

9. The planar lighting device according to claim 1, wherein the optical wave guide unit preserves a polarization plane of the laser light beams.

10. The planar lighting device according to claim 1, wherein the optical wave guide unit is an optical fiber.

11. The planar lighting device according to claim 10, wherein the optical fiber is placed in parallel with the light guide plate in a manner so as to be turned over at each of both ends of the light guide plate.

12. The planar lighting device according to claim 11, wherein the light guide plate is divided into a plurality of areas, and the optical fiber is placed in each of the plurality of areas.

13. The planar lighting device according to claim 10, wherein the optical fiber is composed of a plurality of linear optical fibers.

14. The planar lighting device according to claim 10, wherein a scatterer is provided in the optical fiber.

15. The planar lighting device according to claim 10, wherein the optical fiber is bent in a bellows shape.

16. The planar lighting device according to claim 10, wherein the optical fiber has a terminal end formed into a mirror.

17. The planar lighting device according to claim 16, wherein a PBS and a 1/4 wavelength plate are placed between the laser light source and the optical fiber.

18. The planar lighting device according to claim 1, wherein the optical wave guide unit is a plurality of linear optical wave guide paths that are formed in a planar optical wave guide plate and propagate laser light beams from the laser light source.

19. The planar lighting device according to claim 1, further comprising: a light path switch that switches laser light beams entering the optical wave guide unit.

20. A liquid crystal display device comprising:
a liquid crystal display panel;
a planar lighting device according to claim 1, which illuminates the liquid crystal display panel from a back face side.

21. The liquid crystal display device according to claim 20, wherein the planar lighting device is further provided with a light path switch that switches laser light beams entering the optical wave guide unit, and the liquid crystal display device drives pixels of the liquid crystal display panel in synchronism with the light path switch.

22. The liquid crystal display device according to claim 20, further comprising:
a diffusion plate arranged between the liquid crystal display panel and the planar lighting device.
